# EUROPEAN PATENT SPECIFICATION

(11) **EP 2 732 991 B1**
(45) Date of publication and mention of the grant of the patent: **31.10.2018**
(21) Application number: 12193037.4
(22) Date of filing: 16.11.2012
(51) Int. Cl.: B60D 1/54

(54) **Towing hook arrangement and a method for locking a towing hook arrangement**
Zughakenanordnung und Verfahren zur Verriegelung einer Zughakenanordnung
Agencement de crochet de remorquage et procédé de verrouillage d'un agencement de crochet de remorquage

(43) Date of publication of application: 21.05.2014
(73) Proprietor: Brink Towing Systems B.V., 7951 CX Staphorst (NL)
(72) Inventor: Eising, Frits, 7951 CX Staphorst (NL); Jansen, Martin, 7701 JR Dedemsvaart (NL)
(74) Representative: Valea AB

(56) References cited:
- EP-A1- 1 557 299
- DE-U1-202008 007 581
- FR-A1- 2 450 167

## Description

### TECHNICAL FIELD

A towing hook arrangement and a method for locking a displaceable towing hook of a towing hook arrangement. The towing hook arrangement comprises a displaceable towing hook, displaceable between a first and a second position, such as an operative position and an idle position. A towing hook lock arrangement for locking the towing hook in the first or the second position. The towing hook arrangement and the method for locking a displaceable towing hook of a towing hook arrangement reduces wear of individual components and partly reduce the need for strong and rigid components.

### BACKGROUND OF THE INVENTION

Towing hooks are commonly used to tow, or mount, trailers, caravans, bike carriers, luggage carriers or vehicles. There are generally three types of towing hooks; fixed towing hooks, detachable towing hooks and displaceable towing hooks, sometimes referred to as retractable towing hooks. Displaceable towing hooks can be positioned between a towing position, also referred to as an operative position, and a storage position, also referred to as an idle position. For example EP 1,894,752 B1 discloses a displaceable towing hook. The towing hook projects from a housing which forms a ball and socket joint with a ball portion of the towing hook. The ball and socket coupling between the towing hook and the housing permits the towing hook to be positioned in an operative position for towing an object, and in an idle position.

The publication No. EP 1,557,299 A1 discloses a towing hook arrangement having a displaceable towing hook. A lock arrangement is adapted to lock the towing hook in a use position. The lock arrangement is formed by a spring loaded wedge shaped bolt which can be secured in a wedged position using a plunger.

It is important that the towing hook is properly locked in the operative position and in the idle position. Various different lock mechanisms have been suggested in the prior art. One lock mechanism is disclosed in the European patent No. EP 1,894,752 B1 which suggests a solution comprising two displaceable lock members operated via a first driving shaft. The displacement of the towing hook is implemented via a second driving shaft comprising a cog wheel interacting with a cam track arranged on the towing hook. The operation of the second driving shaft retains the towing hook in position for it to be properly locked in position by the displaceable lock members.

One type of displaceable towing hook arrangements are manually operated. These towing hook arrangements are operated i.e. locked, unlocked and displaced, by the user i.e. without the involvement of electrical motors. Semi-automatic towing hook arrangements can use an electrical motor for locking the towing hook in the operative position and the idle position, while the actual displacement of the towing hook there between is manually performed by the user.

Some semi-automatic towing hook arrangements have a towing hook lock which is motorized. Either the towing hook lock itself is motorized or a spring member, which is arranged in working cooperation with the towing hook lock, is automatically loaded via a motor. In both the above mentioned cases, the towing hook lock can be displaced into position by a strong and sturdy spring as soon as the towing hook is positioned in the operative position by the user. As the spring is very strong to force the towing hook lock into position and to retain in position, the wear of the individual components and the displaceable parts is relatively high. Further, the strong spring generates a high sound and uncomfortable vibrations in the towing hook arrangement when the components are biased together. At least for semi-automatic towing hook arrangements there is a need to find more delicate ways of locking the towing hook in the operative or idle position.

### SUMMARY

It is an object with the present invention to provide for a solution which reduces at least some of the drawbacks mentioned above, or at least provides for a useful alternative. The objects are at least partly met by a towing hook arrangement for a vehicle according claim 1. The towing hook arrangement comprises a towing hook which is displaceable between a first and a second position, such as an operative position and an idle position. The towing hook arrangement comprises a towing hook lock arrangement for locking the towing hook in at least one of the first position or the second position.

The towing hook arrangement comprises a temporary lock, the temporary lock is adapted to retain the towing hook in at least one, preferably at least two, preliminary lock position(s), wherein in the at least one preliminary lock position, the towing hook lock arrangement can lock the towing hook.

The towing hook arrangement effectively reduces the wear of the towing hook lock arrangement as when it is actuated to lock the towing hook in the first or in the second position, the towing hook is held in a preliminary lock position by means of the temporary lock. As the position is a preliminary position in which the towing hook is not fully locked and is not intended to tow an object, all of the components of the temporary lock do not need to be strong and sturdy. The temporary lock thus retains the towing hook in the preliminary lock position and provides the towing hook arrangement with the capability to temporarily retain the towing hook in a position in which the main lock mechanism can be fully actuated. Furthermore, the towing hook arrangement is user friendly in the sense that the towing ball of the towing hook is temporarily held in position as the towing hook is locked in its position.

The preliminary lock position can be the first and/or the second position, or the towing hook can be further displaced a small distance to the first or the second position as a consequence of the towing hook lock arrangements being actuated.

It is possible that the towing hook lock arrangement is adapted to be operative in both the first and the second position, or in only one of the first or the second positions, while the temporary lock can preferably be used in both the first and the second positions.

The first position can be an operative position and the second position can be an idle position. Each of the operative position and the idle position can have a dedicated preliminary lock position.

According to an aspect, the temporary lock is formed by a displaceable lock member. The displaceable lock member is preferably biased into position by a biasing member, such as a spring, or any other suitable compressible yet form restoring member, such as a rubber member, a piston or the like.

According to an aspect, the temporary lock is at least partly formed by the towing hook lock arrangement. The temporary lock could optionally be formed by a separate lock mechanism, such as by a separate displaceable lock member, e.g. a separate latch bolt, with respect to the towing hook lock arrangement.

According to an aspect, the temporary lock comprises a first displaceable lock member, and a shaft adapted to displace the first displaceable lock member between a first and a second position. The shaft could be a driving shaft which is adapted to actuate the displacement of at least one displaceable lock member of the towing hook lock arrangement. When the first displaceable lock member is in the first position, the towing hook lock can be actuated to lock the towing hook in the first position or second position. This could be effectuated by further tightening the first displaceable lock member, or by further tightening the first displaceable lock member and in addition further introducing a second displaceable lock member which is adapted to lock the towing hook from displacement advantageously in a similar manner as the first displaceable lock member. According to an aspect, the towing hook comprises a ball at one end, hereafter referred to as being on the second end of the towing hook (the first end of the towing hook being adapted to be connected to a towable object). Such ball, or ball portion, is adapted to form a ball and socket joint together with a housing. The ball and socket joint permits the towing hook to be displaced between the operative and the idle position. The displaceable lock member is adapted to engage the ball of the towing hook to retain the towing hook in the preliminary lock position. For example, the displaceable lock member can lock the displacement of the towing hook by being wedged, or positioned in an obstructing manner, between the housing and a surface of the ball of the second end of the towing hook, or by being inserted into a groove of the ball of the second end of the towing hook.

The towing hook lock arrangement comprises a first and a second displaceable lock member and at least one of the first or the second lock members forms a part of the temporary lock. This is a cheap solution which uses already existing parts of the towing hook lock arrangement to provide for a versatile solution.

According to an aspect, the towing hook arrangement can comprises a sensor. The towing hook arrangement thus enables electric monitoring of the towing hook arrangement. The sensor is advantageously arranged in the housing which forms the ball and socket joint with the ball, or ball portion, of the towing hook. Optionally, the senor can be positioned on the outside of the housing adapted to be operating via an aperture, or window, on the housing. The sensor is adapted to detect the position of at least a portion of the temporary lock, or a reference point on the temporary lock, or a displaceable part of the towing hook. The detection of a relative displacement of the temporary lock can be used as a starting signal for the actuation of the towing hook lock, independently of whether the towing hook is to be locked in the operative position or in the idle position. It can also be used to control or detect the status of the towing hook arrangement, or the temporary lock, independently of whether the temporary lock is partly formed by the towing hook arrangement. The sensor can be adapted to detect the displacement, or any other property if a suitable sensor is selected, of one or more components of the towing hook arrangement. For example, the sensor can be adapted to detect the displacement of a biasing member, such as a spring, a shaft such as a driving shaft. A very versatile towing hook arrangement can be provided which permits a relatively high level of control and supervising capabilities.

According to an aspect, the towing hook is configured to be manually displaced, at least a part of the distance, between the first and the second position, e.g. between the operative position and the idle position. The towing hook arrangement can thus be a semi-automatic towing hook arrangement, it could however also be an automatic towing hook arrangement with manual displacement capability, or a full automatic towing hook arrangement. The towing hook can thus be configured to be automatically displaced between the first and the second position.

According to an aspect, if the temporary lock is driven, or actuated, by an electrical motor, it is possible to monitor the status of the temporary lock. For example, it is possible to monitor that a complete lock is achieved, for example by measuring the amount of revolutions used for the driving shaft of the electrical motor to drive the locking block, or the displaceable lock member, in position.

The towing hook can be said to comprise at least one preliminary lock position, in which the towing hook is preliminary retained by a temporary lock until the towing hook lock arrangement can lock the towing hook. It should be noted that a towing hook retained only by means of an electrical motor is not considered to be a lock in the context of the present invention.

Embodiments of the present invention also relates to a method for locking a displaceable towing hook of a towing hook arrangement. The towing hook arrangement can be a towing hook arrangement as described herein, according to any of the appending claims, or any other towing hook arrangement. The towing hook arrangement comprises a towing hook, a towing hook lock arrangement, the towing hook being displaceable between a first and a second position.

The towing hook is retained in a preliminary lock position by a temporary lock, and subsequently thereafter, the towing hook lock arrangement is actuated to lock the towing hook, or the towing hook lock arrangement is further manipulated to fix the towing hook in the first or the second position.

It is possible that the towing hook lock arrangement is adapted to be operative in both the first and the second position, or in only one of the first or the second positions, while the temporary lock can be used in both the first and the second positions.

The towing hook comprises a ball at one end thereof, and the towing hook is retained in the preliminary lock position by displacing at least one displaceable lock member in engagement with the ball of the end of the towing hook.

The towing hook is retained in the preliminary lock position by displacing at least one part of the towing hook lock arrangement. Subsequently, the towing hook lock arrangement can be manipulated to fully engage and retain the towing hook in the first position or the second position.

### BRIEF DESCRIPTION OF THE DRAWINGS

Non-limiting embodiments of the present invention will be described in greater detail with reference to the accompanying drawings in which;
figure 1a shows a towing hook arrangement comprising a towing hook lock arrangement partly seen with a transparent housing;
figure 1b shows the towing hook arrangement of figure 1a from the side;
figure 2 shows a semi-automatic towing hook arrangement with the top of the housing removed to visualize the interior of the housing, the towing hook lock arrangement locks the towing hook in an operative position;
figure 3 shows the semi-automatic towing hook arrangement of figure 2 with the towing hook lock arrangement unlocked and the towing hook ready to be displaced to an idle position, the temporary lock ready to retain the towing hook in a preliminary lock position;
figure 4 shows the embodiment of the semi-automatic towing hook arrangement of figure 2 with the towing hook lock arrangement unlocked, and the temporary lock just before retaining the towing hook in a preliminary lock position;
figure 5 shows the embodiment of the semi-automatic towing hook arrangement of figure 2, the temporary lock is retaining the towing hook in a preliminary lock position;
figure 6 shows the embodiment of the semi-automatic towing hook arrangement of figure 2 with the towing hook lock arrangement fully engaged with the towing hook locking the towing hook in the second position, i.e. the idle position;
figure 7 shows the embodiment of the semi-automatic towing hook arrangement of figure 2 with the temporary lock just before retaining the towing hook in a preliminary lock position;
figure 8 shows the embodiment of the semi-automatic towing hook arrangement of figure 2, the temporary lock is retaining the towing hook in a preliminary lock position before the towing hook is fully locked in the first position, i.e. the operative position, by the towing hook lock arrangement;

### DETAILED DESCRIPTION OF PREFERRED EMBODIMENTS

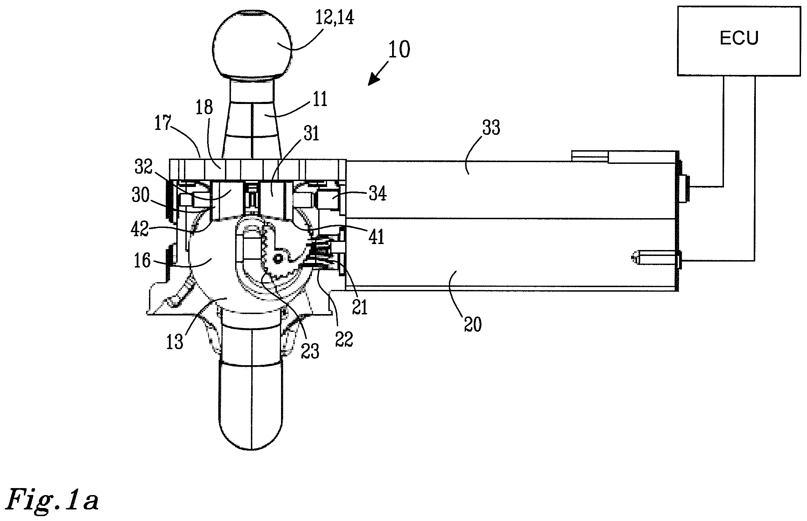

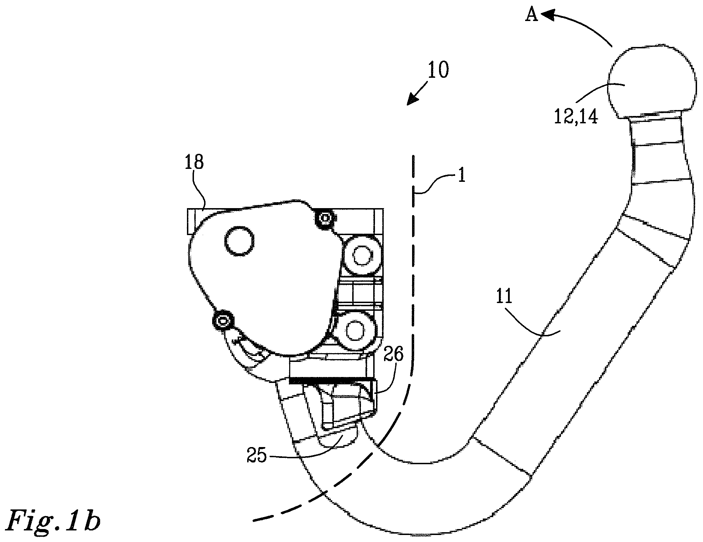

Figure 1 shows a towing hook arrangement 10. The towing hook arrangement 10 can be arranged at the rear of a vehicle, such as an automobile, enabling the vehicle to tow, or mount, an object such as a trailer, caravan, bike carrier, vehicle, or the like. The towing hook arrangement 10 comprises a towing hook 11 having a first and a second end 12, 13. The first end 12 of the towing hook has a towing ball 14 to which the object can be connected via a ball and socket connection. The second end 13 of the towing hook 11 comprises a ball 16, or a ball portion, forming a ball and socket connection 17 together with a housing 18 of the towing hook arrangement 10.

The towing hook 11, and the towing ball 14, can be displaced between a first and a second position. In the shown embodiment, the towing hook 11 is pivoted about a pivot point in the center of the ball 16 of the second end 13 of the towing hook 11. The first and the second position can be an operative position, as shown in figure 1a, and an idle position (not shown). In the operative position, the towing hook arrangement 10 is ready to be connected to an object, and able to tow the object after the vehicle (not shown). In the idle position, the towing hook 11 is generally in a concealed position, or in a storage position, e.g. behind a bumper of the vehicle.

To displace the towing hook 11 between the operative position and the idle position, the towing hook 11 is optional connected to a first electrical motor 20 via a driving shaft 21, although manual displacement with or without the first electrical motor is possible. At the end of the driving shaft 21 is a gear wheel 22 which cooperates with a cam surface 23 arranged on the ball 16 of the second end 13 of the towing hook 11. The torque from the first electrical motor 20 is transferred as the driving shaft 21 rotates via meshed gears to displace the towing hook 11 between the operative and idle position. Such coupling is further described in the European Patent No. EP 1,894,752 B1, Brink Internat BV. Figure 1b shows the embodiment of figure 1a with a view towards the side of the towing hook arrangement 10; visible in figure 1b are the towing hook 11, the towing ball 14 and the housing 18. A part of the rear of a vehicle 1 is further schematically shown in figure 1b.

Further seen in figure 1a; the towing hook arrangement 10 comprises a towing hook lock arrangement 30 comprising a first and a second displaceable lock member 31, 32. A second electrical motor 33 operates a driving shaft 34 which is connected to the first and the second displaceable lock members 31, 32 via threads. The pitch angle of the threaded connection of the first displaceable lock member 31 and the driving shaft 34 of the second electrical motor 33 is arranged in an opposite direction as compared to the threaded connection of the second displaceable lock member 32 and the driving shaft 34 of the second electrical motor 33. If for example the pitch angle of the thread of the first displaceable lock member 31 is +10 degrees, the pitch angle of the thread of the second displaceable lock member 32 can be -10 degrees. Thus upon rotation of the driving shaft 34 of the second electrical motor 33, the first and the second displaceable lock members 31, 32 will be displaced away from each other or towards each other, dependent of the direction of rotation of the driving shaft 34 of the second electrical motor 33. It is of course possible to have only one displaceable lock member which can be displaced in the same, or similar, manner as described above.

An electronic control unit ECU is connected to the first electrical motor 20 if such is present, and the second electrical motor 33, to supervise the amount of power, or current, supplied to the first and the second electrical motors 20, 33. By supervising is hereby meant that it can perform at least one of the following measures; control, measure, monitor, detect, track or record, or the like, or mixtures thereof. It can thus either be used to explicitly control the amount of power, and/or simply to detect the amount of power supplied. The ECU can further be adapted to supervise the output signal from a sensor, as will be described below.

The towing hook 11 is, when positioned in the operative position, locked in position by the towing hook lock arrangement 30, and the first and the second displaceable lock members 31, 32, as mentioned above. A wedge formed section 25 on the towing hook 11 assists in retaining the towing hook 11 in position with a corresponding wedge section 26 on the housing 18. The first and the second displaceable lock members 31, 32 thus wedges the towing hook 11 into the wedge section 26 of the housing 18 by imparting a torque to the towing hook 11 as indicated by the arrow A in figure 1b. The wedge section 26 of the housing 18 provides for a permanent stop to the towing hook 11 and prevents it from any further rotation in that direction.

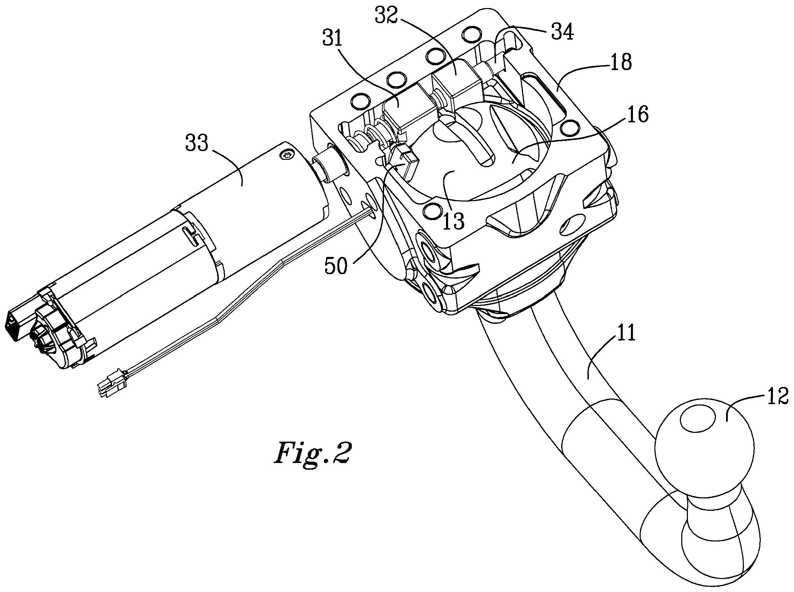

Figure 2 shows the ball and socket connection of the towing hook arrangement 10. Figure 2 shows a semi-automatic towing hook arrangement which is adapted to be displaced by a user at least partly between an operative position and an idle position. Figure 2 also shows the towing hook lock arrangement comprising the first and the second displaceable lock members 31, 32 and the driving shaft 34 in greater detail. Figure 2 further shows the towing hook 11 comprising the first and the second end 11, 12, the ball 16 of the second end 13 of the towing hook 11, the housing 18, and the second electrical motor 33. The towing hook 11 is in figure 2 depicted in the operative position.

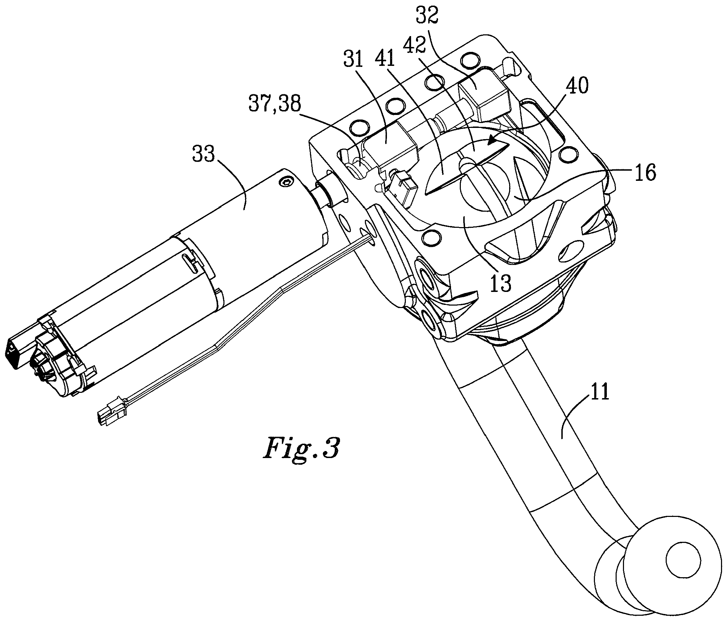

Figure 3 shows the ball 16 of the second end 13 of the towing hook 11 which comprises a slot 40 having a first and a second angled surface 41, 42 which cooperates with the first and the second displaceable lock members 31, 32 respectively. The first and the second angled surfaces 41, 42 are arranged with an angle of about 170 degrees with respect to each other, forming an apex between the first and the second angled surfaces 41, 42, as can be seen in figure 1a for example. Optionally, the mentioned angle can be between 90-180 degrees, such as from 100- 179 degrees, 120-179 degrees or 140-175 degrees. In figure 3, the first and the second displaceable lock members 31, 32 have been displaced with respect to each other so that they have been disengaged from the slot 40, the towing hook 11, which has been displaced a shorter distance due to gravity, is now ready to be displaced to the idle position either manually (by a user) or automatically by means of the first electrical motor.

As is noticed in figure 3, the first displaceable lock member 31 is arranged in working cooperation with a biasing member 37, in this embodiment in the form of a spring 38, and is thus spring loaded when being displaced to an unlocked position as shown in figure 3. In the shown embodiment, the whole driving shaft 34 is spring loaded via the biasing member 37 as the first displaceable lock member 31 is threadably engaged with the driving shaft 34. The displaceable lock members 31, 32 can be threadably engaged directly with the driving shaft 34 of indirectly with the driving shaft 34.

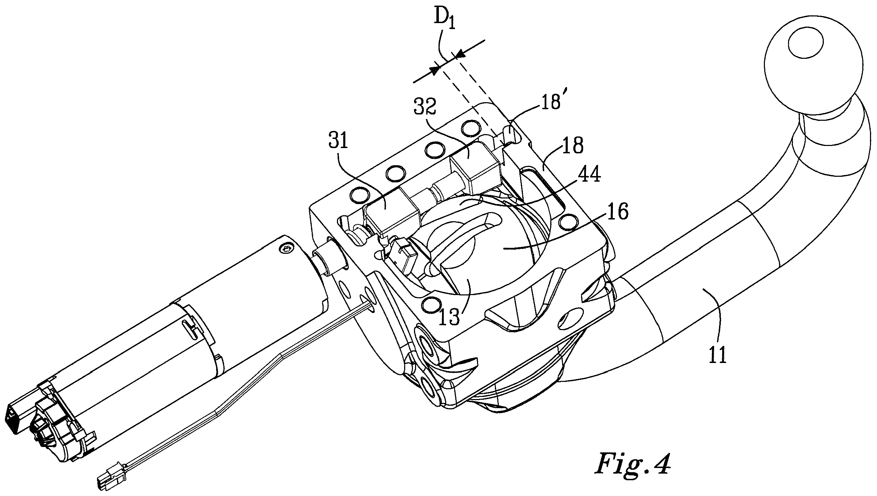

Figure 4 shows the towing hook 11 after it has been displaced towards the idle position. The towing hook 11 is however not yet fully locked in the idle position. As is noticed, a second slot 44 is arranged on the ball 16 of the second end 13 of the towing hook 11. The second slot 44 is configured to cooperate with the first displaceable lock member 31 to lock the towing hook 11 in the idle position, as will be described below. It is also functioning to retain the towing hook 11 in a preliminary lock position.

The housing 18 comprises a cavity 18', although any other suitable void could work, to receive a portion of the driving shaft 34. The end 34' of the driving shaft 34 is separated a distance D1 from the side housing 18 when the first displaceable lock member 31 if spring loaded.

Before the lock arrangement 30 can be actuated to fully lock the towing hook 11 in the idle position, the towing hook 11 is retained in a preliminary lock position by a temporary lock, or temporary lock function, in the shown embodiment by displacing the driving shaft 34 about 6 mm and thus the first displaceble lock member 31 to engage the second slot 44 of the ball 16 of the second end 13 of the towing hook 11. The driving shaft could be displaced any suitable distance between 1-20 mm, preferably 3-20 mm, more preferably 3-15 mm, to retain the towing hook 11 in the preliminary lock position.

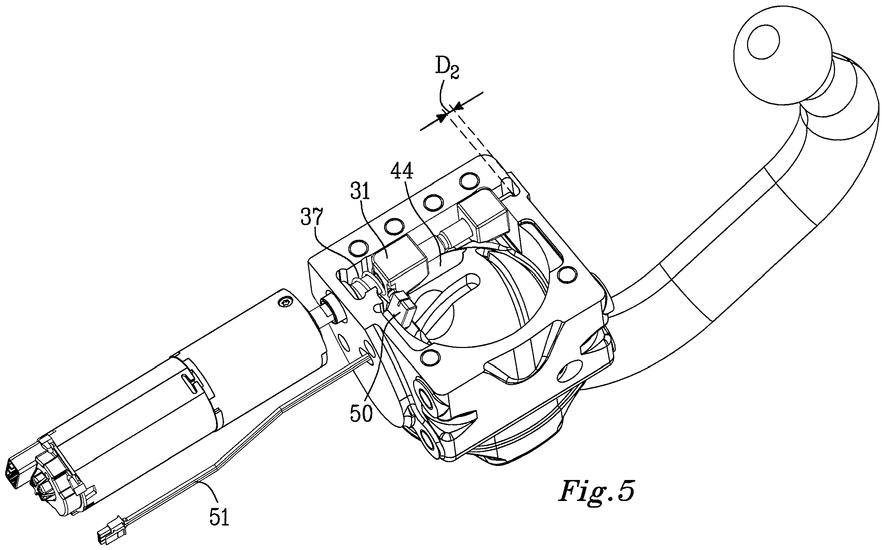

Figure 5 shows how the spring loaded first displaceable lock member 31 has been biased into engagement with the second slot 44 by means of the biasing member 37 to initially retain the towing hook 11 in the preliminary lock position. In this case the preliminary lock position is an idle preliminary lock position, in which the first and the second displaceable lock members 31, 32 can be actuated to the lock position. As is noticed in figure 5, and indicated by the notably shorter distance D2 in figure 5 as compared to the distance D1 shown in figure 4, the driving shaft 34 has been displaced so that the end 34' of the driving shaft has substantially entered the cavity 18'. The first displaceble lock member 31 is thus wedged into engagement with the second slot 44 of the ball 16 of the second end 13 of the towing hook 11 and can retain the towing hook 11 in a preliminary lock position in which the lock arrangement can be actuated to readily lock the towing hook 11 in the selected position. Although not shown in figure 5, at least the first displaceable lock member 31 is interacting with a surface of the housing 18, more specifically with a top plate (not shown) mounted on the housing 18, to obstruct the displacement of the towing hook 11.

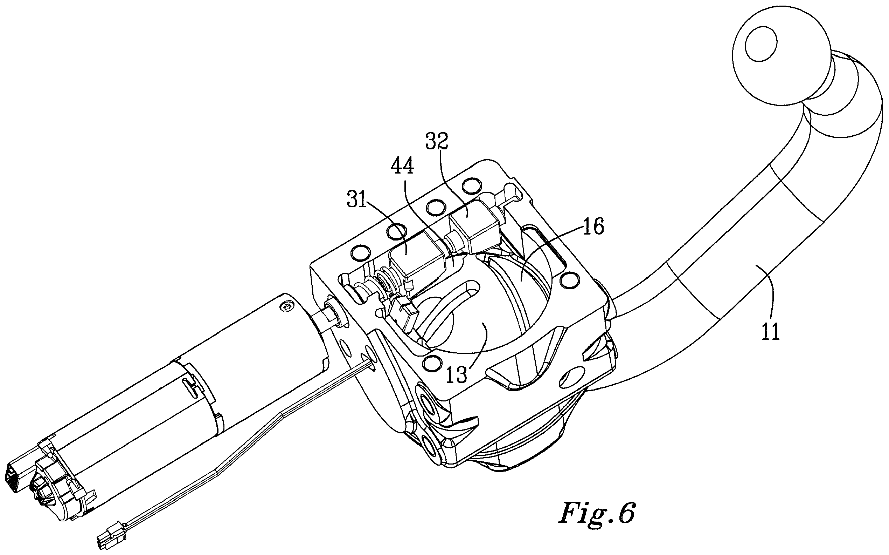

The towing hook arrangement 10 also comprises a sensor 50 adapted to detect the position of the first displaceable lock member 31. With reference to figure 5, the sensor 50 detects the sudden displacement of the spring loaded first displaceable lock member 31. Based on the signal of the sensor 50 it can be deducted that the towing hook 11 is retained in the preliminary lock position and that the lock arrangement can be actuated to fully lock the towing hook 11, substantially transforming the preliminary lock position to the idle position. The signal from the sensor 50 can be directed directly to the second electrical motor 33 or to the ECU, via a cord 51. The first and the second displaceable lock members 31, 32 are then subsequently displaced to a lock position so that the towing hook 11 is readily locked in the idle position, as shown in figure 6. The sensor 50 can be any suitable type but micro switch sensor, a magnetic sensor, light based sensors such as infrared light or laser sensors, such as laser diode sensors, are preferred sensors. Another type of sensor could be sound sensors. The sensor 50 could be adapted to detect the "clicking" sound from when the first displaceable lock member is biased in engagement with the ball 16 of the second end 13 of the towing hook 11 for example.

Figure 6 shows the towing hook 11 when being locked in the idle position. As is noticed, the first displaceble lock member 31 if fully engaged with the second slot 44 of the ball 16 of the second end 13 of the towing hook 11, and hence wedged between the ball 16 of the second end 13 of the towing hook 11 and the housing 18. It would be possible that the second slot 44 of the ball 16 of the second end 13 of the towing hook 11 was adapted to receive the second displaceable lock member 32 if desired, however, as the towing hook 11 is in the idle position, the load exerted on the towing hook 11 is significantly less than in the operative position, the use of two displaceable lock members is of less importance.

To displace the towing hook 11 back to the operative position, the first displaceable lock member 31 is disengaged from the second slot 44 of the ball 16 of the second end 13 of the towing hook 11, back to the position shown in figure 3, followed by the position shown in figure 4. The biasing member 37 again loads the first displaceable lock member 31 as it is displaced to the unlocked position. The sensor 50 detects the position of the first displaceable lock member 31 and by means of the signal of the sensor 50, it can be acknowledged that the towing hook 11 can be displaced towards the operative position.

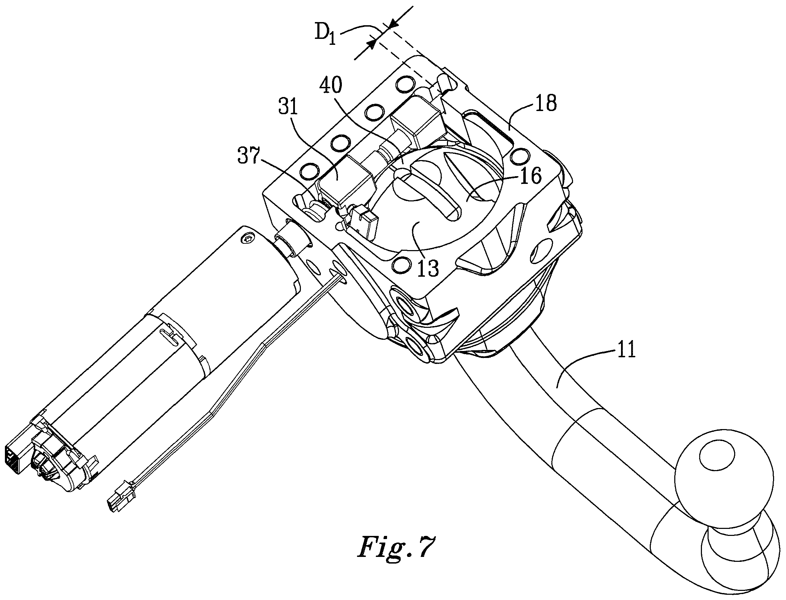

Figure 7 shows the towing hook 11 just before the spring loaded first displaceable lock member 31 is displaced to engage the slot 40 of the ball 16 of the second end 13 of the towing hook 11.

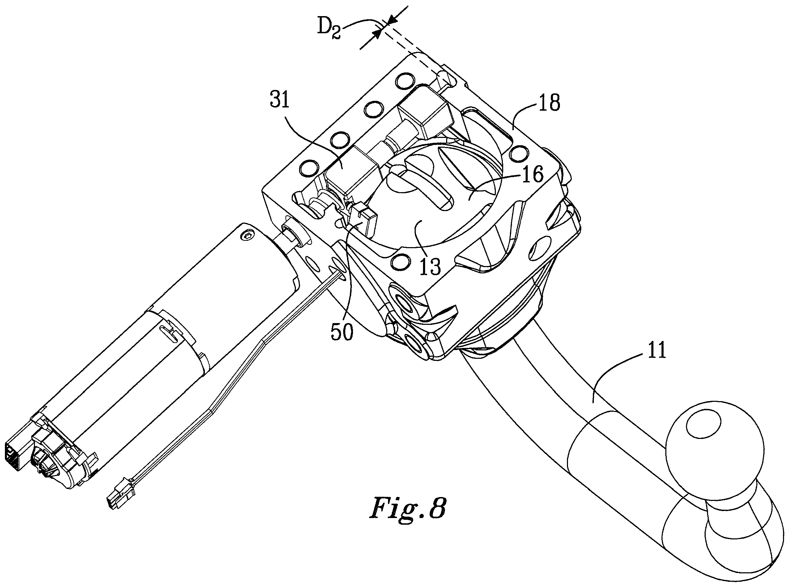

Figure 8 shows the towing hook 11, just after the first displaceable lock member 31 has been biased into engagement, and is again in a preliminary lock position. The towing hook lock arrangement is now ready to fully engage the slot 40 of the ball 16 of the second end 13 of the towing hook 11. The sensor 50 detects the sudden displacement of the spring loaded first displaceable lock member 31 when it moves to engage the slot 40 of the ball 16 of the second end 13 of the towing hook 11. Based on the signal of the sensor 50 it can be deducted that the towing hook 11 is retained in a preliminary lock position, in this case an operative preliminary lock position. The lock arrangement 30 can now be actuated by means of the second electrical motor 33 to lock the towing hook 11 in the operative position.

Figure 2 shows the positions of the first and the second displaceable lock members 31, 32 after they have been displaced to lock the towing hook 11 in the operative position.

Instead of using one of the first or the second displaceable lock members of the towing hook lock arrangement 30, a separate lock member, i.e. a separate mechanism from the above described towing hook lock arrangement 30, can be used.

It is conceivable that the sensor 50 detects another object than the first displaceable lock member 31 to provide a signal carrying information of when the second electrical motor can displace the first and/or the second displaceable lock members 31, 32 to their locked position, or when the first electrical motor 20 can displace the towing hook 11, if such is present. For example, the sensor 50 can be configured to detect the position or tension of the biasing member 37, in the shown embodiment the spring 38, a reference point of the ball 16 of the second end 13 of the towing hook 11 or any other suitable reference point on the towing hook 11.

## Claims

1. A towing hook arrangement (10) for a vehicle (1), said towing hook arrangement (10) comprising a towing hook (11), said towing hook (11) being displaceable between a first and a second position, said towing hook arrangement (10) comprising a towing hook lock arrangement (30) for locking said towing hook (11) in at least one of said first position or said second position, wherein said towing hook arrangement (10) comprises a temporary lock (31, 34) adapted to retain said towing hook (11) in at least one preliminary lock position, wherein in said at least one preliminary lock position, said towing hook lock arrangement (30) can lock said towing hook (11), **characterized in that**
said towing hook lock arrangement (30) comprises a first and a second displaceable lock member (31, 32), and **in that** at least one of said first or said second displaceable lock members (31, 32) forms a part of said temporary lock (31, 34), wherein said towing hook (11) comprises a ball (16) at one end (13) of said towing hook (11), wherein said ball (16) comprises a slot (40) having a first and a second angled surface (41, 42) which cooperates with the first and the second displaceable lock members (31, 32) respectively.

2. The towing hook arrangement (10) according to claim 1, wherein said first position is an operative position.

3. The towing hook arrangement (10) according to claim 1 or 2, wherein said second position is an idle position.

4. The towing hook arrangement (10) according to any one of the preceding claims, wherein said temporary lock (31, 34) is formed by a displaceable lock member (31), said displaceable lock member (31) is preferably biased into position by a biasing member (37).

5. The towing hook arrangement (10) according to claim 4, wherein said displaceable lock member (31) is adapted to engage said towing hook (11) to retain said towing hook (11) in said at least one preliminary lock position.

6. The towing hook arrangement (10) according to claim 5, wherein said towing hook (11) comprises a ball (16) at one end (13) of said towing hook (11), and in that said displaceable lock member (31) is adapted to engage said ball (16) of said end (13) of said towing hook (11)

7. The towing hook arrangement (10) according to any one of the preceding claims, wherein said temporary lock (31, 34) is at least partly formed by said towing hook lock arrangement (10).

8. The towing hook arrangement (10) according to claim 7, wherein said temporary lock (31, 34) comprises a first displaceable lock member (31), and a driving shaft (34) adapted to displace said first displaceable lock member (31) between a first and a second position.

9. The towing hook arrangement (10) according to claim 8, wherein when said first displaceable lock member (31) is in said first position, said towing hook lock arrangement (30) can be actuated to lock said towing hook (11) in said first position or second position.

10. The towing hook arrangement (10) according to any one of the preceding claims, wherein said towing hook arrangement (10) comprises a sensor (50), preferably said sensor (50) is adapted to detect the position of at least a portion of said temporary lock (31, 34), said towing hook (11), or any other suitable reference point.

11. The towing hook arrangement (10) according to any one of the claims 1-6 or 10, wherein said temporary lock comprises a separate displaceable lock member with respect to said towing hook lock arrangement (30).

12. The towing hook arrangement (10) according to any one of the preceding claims, wherein said towing hook (11) is configured to be manually displaced, at least a part of the distance, between said first and said second position.

13. The towing hook arrangement (10) according to any one of the preceding claims, wherein said towing hook (11) is configured to be automatically displaced between said first and said second position.

14. A method for locking a displaceable towing hook (11) of a towing hook arrangement (10), said towing hook arrangement (10) comprises a towing hook (11), a towing hook lock arrangement (30), said towing hook (11) comprises a ball (16) at one end (13) thereof and being displaceable between a first and a second position, wherein said towing hook lock arrangement (30) comprises a first and a second displaceable lock member (31, 32), and in that at least one of said first or said second displaceable lock members (31, 32) forms a part of a temporary lock (31, 34), **characterized in that** said towing hook (11) is retained in at least one preliminary lock position by the temporary lock (31, 34) by displacing the first displaceable lock member (31) into engagement with a first angled surface (41) of a slot (40) of said ball (16), and subsequently thereafter, said towing hook lock arrangement (30) is actuated to lock said towing hook (11) by displacing said second displaceable lock member (32) into engagement with a second angled surface (42) of said slot (40) of said ball (16).

## Patentansprüche

1. Schlepphakenanordnung (10) für ein Fahrzeug (1), wobei die Schlepphakenanordnung (10) einen Schlepphaken (11) umfasst, wobei der Schlepphaken (11) zwischen einer ersten und einer zweiten Position verschiebbar ist, wobei die Schlepphakenanordnung (10) eine Schlepphaken-Sperranordnung (30) zum Sperren des Schlepphakens (11) in mindestens einer der ersten Position oder der zweiten Position umfasst, wobei die Schlepphakenanordnung (10) eine temporäre Sperre (31, 34) umfasst, die angepasst ist, um den Schlepphaken (11) in mindestens einer vorläufigen Sperrposition zu halten, wobei die Schlepphaken-Sperranordnung (30) den Schlepphaken (11) in der mindestens einen vorläufigen Sperrposition sperren kann, **dadurch gekennzeichnet, dass**
die Schlepphaken-Sperranordnung (30) ein erstes und ein zweites verschiebbares Sperrelement (31, 32) umfasst, und dadurch, dass mindestens eines des ersten oder des zweiten verschiebbaren Sperrelements (31, 32) einen Teil der temporären Sperre (31, 34) bildet, wobei der Schlepphaken (11) eine Kugel (16) an einem Ende (13) des Schlepphakens (11) umfasst, wobei die Kugel (16) eine Aussparung (40) umfasst, die eine erste und eine zweite abgewinkelte Oberfläche (41, 42) aufweist, die jeweils mit dem ersten und dem zweiten verschiebbaren Sperrelement (31, 32) zusammenwirkt.

2. Schlepphakenanordnung (10) nach Anspruch 1, wobei die erste Position eine betriebliche Position ist.

3. Schlepphakenanordnung (10) nach Anspruch 1 oder 2, wobei die zweite Position eine Ruhestellung ist.

4. Schlepphakenanordnung (10) nach einem der vorstehenden Ansprüche, wobei die temporäre Sperre (31, 34) durch ein verschiebbares Sperrelement (31) gebildet wird, wobei das verschiebbare Sperrelement (31) vorzugsweise durch ein Vorspannelement (37) in Position vorgespannt wird.

5. Schlepphakenanordnung (10) nach Anspruch 4, wobei das verschiebbare Sperrelement (31) angepasst ist, um in den Schlepphaken (11) einzugreifen, um den Schlepphaken (11) in der mindestens einen vorläufigen Sperrposition zu halten.

6. Schlepphakenanordnung (10) nach Anspruch 5, wobei der Schlepphaken (11) eine Kugel (16) an einem Ende (13) des Schlepphakens (11) umfasst, und dadurch, dass das verschiebbare Sperrelement (31) angepasst ist, in die Kugel (16) des Endes (13) des Schlepphakens (11) einzugreifen.

7. Schlepphakenanordnung (10) nach einem der vorstehenden Ansprüche, wobei die temporäre Sperre (31, 34) mindestens teilweise durch die Schlepphaken-Sperranordnung (10) gebildet wird.

8. Schlepphakenanordnung (10) nach Anspruch 7, wobei die temporäre Sperre (31, 34) ein erstes verschiebbares Sperrelement (31) umfasst, und eine Antriebswelle (34), die angepasst ist, um das erste verschiebbare Sperrelement (31) zwischen einer ersten und einer zweiten Position zu verschieben.

9. Schlepphakenanordnung (10) nach Anspruch 8, wobei wenn das erste verschiebbare Sperrelement (31) in der ersten Position ist, die Schlepphaken-Sperranordnung (30) betätigt werden kann, um den Schlepphaken (11) in der der ersten Position oder zweiten Position zu sperren.

10. Schlepphakenanordnung (10) nach einem der vorstehenden Ansprüche, wobei die Schlepphakenanordnung (10) einen Sensor (50) umfasst, wobei der Sensor (50) vorzugsweise angepasst ist, um die Position von mindestens einem Abschnitt der temporären Sperre (31, 34), des Schlepphakens (11), oder irgendeines anderen geeigneten Referenzpunkts zu detektieren.

11. Schlepphakenanordnung (10) nach einem der Ansprüche 1 bis 6 oder 10, wobei die temporäre Sperre ein getrenntes verschiebbares Sperrelement im Verhältnis zu der Schlepphaken-Sperranordnung (30) umfasst.

12. Schlepphakenanordnung (10) nach einem der vorstehenden Ansprüche, wobei der Schlepphaken (11) konfiguriert ist, um mindestens einen Teil der Distanz zwischen der ersten und der zweiten Position von Hand verschoben zu werden.

13. Schlepphakenanordnung (10) nach einem der vorstehenden Ansprüche, wobei der Schlepphaken (11) konfiguriert ist, um automatisch zwischen der ersten und der zweiten Position verschoben zu werden.

14. Verfahren zum Sperren eines verschiebbaren Schlepphakens (11) einer Schlepphakenanordnung (10), wobei die Schlepphakenanordnung (10) einen Schlepphaken (11) umfasst, eine Schlepphaken-Sperranordnung (30), wobei der Schlepphaken (11) eine Kugel (16) an einem Ende (13) davon umfasst und zwischen einer ersten und einer zweiten Position verschiebbar ist, wobei die Schlepphaken-Sperranordnung (30) ein erstes und ein zweites verschiebbares Sperrelement (31, 32) umfasst, und wobei mindestens eines des ersten oder des zweiten verschiebbaren Sperrelements (31, 32) einen Teil einer temporären Sperre (31, 34) bildet, **dadurch gekennzeichnet, dass** der Schlepphaken (11) durch die temporäre Sperre (31, 34) durch Verschieben des ersten verschiebbaren Sperrelements (31) in einen Eingriff mit einer ersten abgewinkelten Oberfläche (41) einer Aussparung (40) der Kugel (16) in mindestens einer vorläufigen Sperrposition gehalten wird, und die Schlepphaken-Sperranordnung (30) danach anschließend betätigt wird, um den Schlepphaken (11) durch Verschieben des zweiten verschiebbaren Sperrelements (32) in einen Eingriff mit einer zweiten abgewinkelten Oberfläche (42) der Aussparung (40) der Kugel (16) zu sperren.

## Revendications

1. Agencement de crochet de remorquage (10) pour un véhicule (1), ledit agencement de crochet de remorquage (10) comprenant un crochet de remorquage (11), ledit crochet de remorquage (11) étant déplaçable entre une première et une seconde position, ledit agencement de crochet de remorquage (10) comprenant un agencement de verrouillage de crochet de remorquage (30) pour verrouiller ledit crochet de remorquage (11) dans au moins l'une de ladite première position ou de ladite seconde position, dans lequel ledit agencement de crochet de remorquage (10) comprend un verrou temporaire (31, 34) adapté pour retenir ledit crochet de remorquage (11) dans au moins une position de verrou préliminaire, dans lequel dans ladite au moins une position de verrou préliminaire, ledit agencement de verrouillage de crochet de remorquage (30) peut verrouiller ledit crochet de remorquage (11), **caractérisé en ce que**
ledit agencement de verrouillage de crochet de remorquage (30) comprend un premier et un second élément de verrou déplaçable (31, 32), et **en ce qu'**au moins l'un dudit premier ou dudit second élément de verrou déplaçable (31, 32) forme une partie dudit verrou temporaire (31, 34), dans lequel ledit crochet de remorquage (11) comprend une boule (16) à une extrémité (13) dudit crochet de remorquage (11), dans lequel ladite boule (16) comprend une fente (40) ayant une première et une seconde surface inclinée (41, 42) qui coopère avec le premier et le second élément de verrou déplaçable (31, 32) respectivement.

2. Agencement de crochet de remorquage (10) selon la revendication 1, dans lequel ladite première position est une position opérationnelle.

3. Agencement de crochet de remorquage (10) selon la revendication 1 ou 2, dans lequel ladite seconde position est une position de repos.

4. Agencement de crochet de remorquage (10) selon l'une quelconque des revendications précédentes, dans lequel ledit verrou temporaire (31, 34) est formé par un élément de verrou déplaçable (31), ledit élément de verrou déplaçable (31) est de préférence poussé en position par un élément poussoir (37).

5. Agencement de crochet de remorquage (10) selon la revendication 4, dans lequel ledit élément de verrou déplaçable (31) est adapté pour se mettre en prise avec ledit crochet de remorquage (11) pour retenir ledit crochet de remorquage (11) dans ladite au moins une position de verrou préliminaire.

6. Agencement de crochet de remorquage (10) selon la revendication 5, dans lequel ledit crochet de remorquage (11) comprend une boule (16) à une extrémité (13) dudit crochet de remorquage (11), et ledit élément de verrou déplaçable (31) est adapté pour se mettre en prise avec ladite boule (16) de ladite extrémité (13) dudit crochet de remorquage (11).

7. Agencement de crochet de remorquage (10) selon l'une quelconque revendications précédentes, dans lequel ledit verrou temporaire (31, 34) est au moins partiellement formé par ledit agencement de verrouillage de crochet de remorquage (10).

8. Agencement de crochet de remorquage (10) selon la revendication 7, dans lequel ledit verrou temporaire (31, 34) comprend un premier élément de verrou déplaçable (31), et un arbre de commande (34) adapté pour déplacer ledit premier élément de verrou déplaçable (31) entre une première et une seconde position.

9. Agencement de crochet de remorquage (10) selon la revendication 8, dans lequel quand ledit premier élément de verrou déplaçable (31) se trouve dans ladite première position, ledit agencement de verrouillage de crochet de remorquage (30) peut être actionné pour verrouiller ledit crochet de remorquage (11) dans ladite première position ou seconde position.

10. Agencement de crochet de remorquage (10) selon l'une quelconque revendications précédentes, dans lequel ledit agencement de crochet de remorquage (10) comprend un capteur (50), de préférence ledit capteur (50) est adapté pour détecter la position d'au moins une partie dudit verrou temporaire (31, 34), dudit crochet de remorquage (11), ou d'un quelconque autre point de référence approprié.

11. Agencement de crochet de remorquage (10) selon l'une quelconque des revendications 1 à 6 ou 10, dans lequel ledit verrou temporaire comprend un élément de verrou déplaçable séparé par rapport audit agencement de verrouillage de crochet de remorquage (30).

12. Agencement de crochet de remorquage (10) selon l'une quelconque revendications précédentes, dans lequel ledit crochet de remorquage (11) est configuré pour être déplacé manuellement, au moins sur une partie de la distance, entre ladite première et ladite seconde position.

13. Agencement de crochet de remorquage (10) selon l'une quelconque revendications précédentes, dans lequel ledit crochet de remorquage (11) est configuré pour être déplacé automatiquement entre ladite première et ladite seconde position.

14. Procédé de verrouillage d'un crochet de remorquage déplaçable (11) d'un agencement de crochet de remorquage (10), ledit agencement de crochet de remorquage (10) comprend un crochet de remorquage (11), un agencement de verrouillage de crochet de remorquage (30), ledit crochet de remorquage (11) comprend une boule (16) à une extrémité (13) de celui-ci et étant déplaçable entre une première et une seconde position, dans lequel ledit agencement de verrouillage de crochet de remorquage (30) comprend un premier et un second élément de verrou déplaçable (31, 32), et au moins l'un dudit premier ou dudit second élément de verrou déplaçable (31, 32) forme une partie d'un verrou temporaire (31, 34), **caractérisé en ce que** ledit crochet de remorquage (11) est retenu dans au moins une position de verrou préliminaire par le verrou temporaire (31, 34) en déplaçant le premier élément de verrou déplaçable (31) en le mettant en prise avec une première surface inclinée (41) d'une fente (40) de ladite boule (16), et ensuite, ledit agencement de verrouillage de crochet de remorquage (30) est actionné pour verrouiller ledit crochet de remorquage (11) en déplaçant ledit second élément de verrou déplaçable (32) en le mettant en prise avec une seconde surface inclinée (42) de ladite fente (40) de ladite boule (16).
